# FASCICULE DE BREVET EUROPEEN

(11) **EP 3 829 909 B1**
(45) Date de publication et mention de la délivrance du brevet: **04.01.2023**
(21) Numéro de dépôt: 19752984.5
(22) Date de dépôt: 01.08.2019
(51) Int. Cl.: B60K 1/02, F16H 37/08, F16H 3/089

(54) **SYSTEME DE PROPULSION POUR VEHICULE ELECTRIQUE**
ELEKTROFAHRZEUGANTRIEBSSYSTEM
ELECTRIC VEHICLE PROPULSION SYSTEM

(30) Priorité: 03.08.2018 FR 1857279
(43) Date de publication de la demande: 09.06.2021
(60) Demande divisionnaire: 21176961.7
(73) Titulaire: VALEO EMBRAYAGES, 80009 Amiens (FR)
(72) Inventeur: MARECHAL, Olivier, 95892 CERGY PONTOISE (FR); COUTURIER, Benoit, 95892 CERGY PONTOISE (FR)
(86) Numéro de dépôt international: PCT/EP2019/070834
(87) Numéro de publication internationale: WO 2020/025774

(56) Documents cités:
- WO-A1-2011/060988
- WO-A1-2017/160702
- DE-A1- 4 434 237

## Description

La présente invention concerne un système de propulsion pour véhicule électrique. Un tel véhicule est à propulsion purement électrique, étant dépourvu de moteur thermique de propulsion.

L'invention concerne notamment un système de propulsion pour véhicule électrique comprenant deux moteurs électriques distincts et deux réducteurs distincts, afin de pouvoir fournir plusieurs modes de fonctionnement distincts à l'utilisateur du véhicule.

On connaît par exemple un tel système de propulsion du certificat d'utilité FR 2 976 142. Le système de propulsion selon ce certificat d'utilité permet de disposer de quatre modes de fonctionnement différents, à savoir : (i) un fonctionnement sur le rapport du premier réducteur avec le premier moteur électrique seul, (ii) un fonctionnement sur le rapport du deuxième réducteur avec le deuxième moteur électrique seul, (iii) un fonctionnement sur le rapport du premier réducteur avec les deux moteurs électriques et, (iv) un fonctionnement sur le rapport du deuxième réducteur avec les deux moteurs électriques. Le système selon ce certificat d'utilité FR 2 976 142 présente, pour chaque moteur électrique, une seule sortie en couple disposée sur l'arbre moteur d'un côté du stator de ce moteur électrique. Une telle architecture impose de positionner nécessairement les systèmes de couplage sélectif permettant le passage d'un mode de fonctionnement à l'autre en aval des réducteurs, dans le chemin du couple généré par les moteurs électriques.

Chacun des documents DE4434237A1 et WO2011/060988A1 divulgue un système de propulsion selon le préambule de la revendication 1.

Il existe un besoin pour améliorer encore les systèmes de propulsion pour véhicule électrique à deux moteurs électriques et à deux réducteurs.

L'invention vise à répondre à ce besoin et elle y parvient, selon la revendication 1, à l'aide d'un système de propulsion pour véhicule électrique, comprenant :
- un premier moteur électrique de propulsion, comprenant un stator et un rotor mobile en rotation autour d'un axe, ce rotor ayant un premier arbre de sortie définissant une première sortie en couple de ce premier moteur électrique d'un côté du stator et une deuxième sortie en couple de ce premier moteur électrique disposée d'un autre côté du stator, ces deux sorties en couple étant axialement opposées,
- un deuxième moteur électrique de propulsion, comprenant un stator et un rotor mobile en rotation autour d'un axe, ce rotor ayant un deuxième arbre de sortie avec au moins une sortie en couple,
- au moins un premier réducteur apte à recevoir le couple fourni sur la première sortie du premier moteur électrique, le cas échéant via un premier système de couplage sélectif ou non-sélectif, ce premier réducteur présentant un premier rapport de réduction,
- au moins un deuxième réducteur apte à recevoir le couple fourni par le deuxième moteur électrique, le cas échéant via un deuxième système de couplage sélectif ou non-sélectif, ce deuxième réducteur présentant un deuxième rapport de réduction, et
- un troisième système de couplage, qui est sélectif ou non, de la deuxième sortie en couple du premier moteur électrique avec la sortie en couple du deuxième moteur électrique.

Le système de propulsion ci-dessus permet de pouvoir si nécessaire disposer les éventuels premier et deuxième système de couplage en amont du réducteur respectif. On dispose ainsi d'un plus grand choix si l'on souhaite implanter des systèmes de couplage, sélectifs ou non.

Au sens de la présente demande :
- un système de couplage entre deux pièces est sélectif lorsqu'il permet de coupler ou de découpler les deux pièces selon la consigne reçue,
- un système de couplage entre deux pièces qui n'est pas sélectif couple en permanence ces deux pièces,
- deux pièces couplées par l'un des systèmes de couplage précités sont solidaires en rotation. Cette solidarisation peut correspondre à un verrouillage de couple dans le cas où le système de couplage met en œuvre un crabot et cette solidarisation peut mettre en œuvre une transmission par frottement dans le cas où le système de couplage met en œuvre un embrayage, et
- « en amont » et « aval » se définissent par rapport au sens de transfert du couple, depuis un moteur électrique vers les roues du véhicule.

Le premier réducteur peut être relié à la première sortie du premier moteur électrique par l'intermédiaire d'un premier système de couplage sélectif ou non-sélectif. Une telle disposition du premier réducteur par rapport au premier système de couplage permet de limiter la valeur du couple à transmettre par ce premier système de couplage, de sorte que l'encombrement et/ou le poids et/ou le coût de ce premier système de couplage peuvent être réduits.

En variante, le premier système de couplage sélectif ou non-sélectif est relié à la première sortie du premier moteur électrique par l'intermédiaire du premier réducteur.

Selon un premier exemple de mise en œuvre, le deuxième arbre de sortie a une première sortie en couple d'un côté du stator et une deuxième sortie en couple d'un autre côté du stator, ces deux sorties en couple étant axialement opposées.

Selon ce premier exemple de mise en œuvre, le deuxième réducteur peut être relié à la première sortie en couple du deuxième moteur électrique, notamment par l'intermédiaire du deuxième système de couplage, et la deuxième sortie en couple de ce deuxième moteur électrique est couplée par l'intermédiaire du troisième système de couplage avec la deuxième sortie en couple du premier moteur électrique. Similairement à ce qui a été mentionné en rapport avec le premier système de couplage, un positionnement du deuxième système de couplage en amont du deuxième réducteur permet de limiter la valeur du couple à transmettre par ce deuxième système de couplage.

En variante, et toujours selon ce premier exemple de mise en œuvre, le deuxième système de couplage est relié à la première sortie en couple du deuxième moteur électrique par l'intermédiaire du deuxième réducteur, et la deuxième sortie en couple de ce deuxième moteur électrique est couplée par l'intermédiaire du troisième système de couplage avec la deuxième sortie en couple du premier moteur électrique.

Autrement dit, selon ce premier exemple de mise en œuvre, chaque arbre de sortie d'un moteur électrique est traversant et chaque moteur électrique présente deux sorties en couple qui sont axialement opposées.

Selon ce premier exemple de mise en œuvre, la deuxième sortie en couple du premier moteur électrique peut être la sortie en couple tournée vers le deuxième moteur électrique et la deuxième sortie en couple du deuxième moteur électrique peut être la sortie en couple tournée vers le premier moteur électrique.

Selon un deuxième exemple de mise en œuvre, le deuxième arbre de sortie peut avoir sa sortie en couple d'un seul côté du stator et cette sortie en couple peut être reliée au deuxième réducteur, le cas échéant via le deuxième système de couplage, et cette sortie en couple peut être couplée à la deuxième sortie en couple du premier moteur électrique par l'intermédiaire du troisième système de couplage.

Dans ce cas, la sortie en couple du deuxième moteur électrique peut être unique et reliée : au deuxième système de couplage et au troisième système de couplage, ces derniers orientant vers des chemins de couple parallèles. Dans ce cas, le premier arbre de sortie peut être axialement dans le prolongement du deuxième arbre de sortie. Toujours dans ce cas, le premier système de couplage peut être concentrique avec le deuxième système de couplage. Le premier système de couplage et le deuxième système de couplage sont par exemple regroupés au sein d'un double embrayage, par exemple à sec ou humide. Chacun de ces embrayages peut comprendre une pluralité de lamelles de frottement.

Dans tout ce qui précède, le premier réducteur peut être unique et le deuxième réducteur peut être unique. Le ratio entre le premier rapport de réduction et le deuxième rapport de réduction peut être compris entre 1 et 5, notamment entre 1.1 et 3.

Dans le cas d'un système de propulsion à unique premier réducteur, le système de propulsion peut comprendre un organe de sélection du premier réducteur, permettant de coupler sélectivement ce réducteur au reste du système de propulsion. Lorsque le premier système de couplage relie le premier réducteur et la première sortie en couple du premier moteur électrique, et que ce premier réducteur est découplé de cette première sortie en couple, un tel organe de sélection permet d'éviter d'entraîner ce premier réducteur depuis l'aval. On peut ainsi obtenir un découplage total de ce premier réducteur. Le cas échéant, un tel organe de sélection peut être présent bien qu'aucun premier système de couplage ne soit présent. On peut alors réduire le coût du système de propulsion en économisant le premier système de couplage.

Dans le cas d'un système de propulsion à unique deuxième réducteur, le système de propulsion peut comprendre un organe de sélection du deuxième réducteur, permettant de coupler sélectivement ce réducteur au reste du système de propulsion. Lorsque le deuxième système de découplage relie le deuxième réducteur et la première sortie du deuxième moteur électrique, et que ce deuxième réducteur est découplé de cette première sortie, un tel organe de sélection permet d'éviter d'entraîner ce deuxième réducteur depuis l'aval du point de vue du chemin du couple. On peut ainsi obtenir un découplage total de ce deuxième réducteur. Le cas échéant, un tel organe de sélection peut être présent bien qu'aucun deuxième système de couplage ne soit présent. On peut alors réduire le coût du système de propulsion en économisant le premier système de couplage.

En variante, plusieurs premiers réducteurs, notamment deux premiers réducteurs, de premier rapport de réduction différant d'un premier réducteur à l'autre peuvent être disposés en parallèle et/ou plusieurs deuxièmes réducteurs, notamment deux deuxièmes réducteurs, de deuxième rapport de réduction différant d'un deuxième réducteur à l'autre peuvent être disposés en parallèle. Le nombre de premiers réducteurs peut ou non être égal au nombre de deuxièmes réducteurs.

Lorsque plusieurs premiers réducteurs en parallèle existent, un organe de sélection de l'un de ces premiers réducteurs peut être prévu, afin de choisir le premier réducteur ayant la valeur de premier rapport de réduction la plus appropriée.

Lorsque plusieurs deuxièmes réducteurs en parallèle existent, un organe de sélection de l'un de ces deuxièmes réducteurs peut être prévu, afin de choisir le deuxième réducteur ayant la valeur de deuxième rapport de réduction la plus appropriée.

Dans le cas d'un système de propulsion à plusieurs premiers réducteurs et/ou à plusieurs deuxièmes réducteurs, on peut le cas échéant ne pas avoir de premier système de couplage et de deuxième système de couplage, les organes de sélection précités assurant alors seuls la fonction de couplage sélectif.

Dans le cas à plusieurs premiers réducteurs et à plusieurs deuxièmes réducteurs, le ratio entre le plus grand rapport de réduction et le plus petit rapport de réduction, considéré sur l'ensemble des premiers et deuxièmes réducteurs, peut être compris entre 1 et 5, étant notamment compris entre 1,1 et 3.

Lorsque deux premiers réducteurs sont en parallèle et lorsque deux deuxièmes réducteurs sont en parallèle, on peut obtenir un système de propulsion à quatre rapports différents.

Chaque système de couplage met par exemple en œuvre un embrayage. Le choix d'un embrayage permet de bénéficier d'un couplage et d'un découplage progressif.

Lorsque le premier système de couplage et le deuxième système de couplage mettent en œuvre des embrayages, et notamment selon le deuxième exemple de mise en œuvre ci-dessus, le premier et le deuxième système de couplage peuvent être regroupés au sein d'un double embrayage, à sec ou humide.

En variante, chaque système de couplage peut être autre, mettant par exemple en œuvre un crabot ou autre. En variante encore, les systèmes de couplage peuvent être de type différent les uns par rapport aux autres.

Le premier système de couplage et le deuxième système de couplage mettent par exemple en œuvre un embrayage et le troisième système de couplage met en œuvre un crabot, ou ce troisième système de couplage n'est pas sélectif.

En variante encore, le premier système de couplage et le deuxième système de couplage mettent en œuvre un crabot et le troisième système de couplage met par exemple en œuvre un embrayage, ou un crabot ou un système de couplage non-sélectif.

Que le premier et le deuxième système de couplage mettent en œuvre un embrayage ou un crabot, le troisième système de couplage peut être choisi parmi :
- l'ensemble formé par : un pignon solidaire en rotation en rotation d'une sortie en couple d'un des deux moteurs électriques, et engrenant avec un premier pignon monté fou sur un arbre intermédiaire, un pignon solidaire en rotation d'une sortie en couple de l'autre des deux moteurs électriques et engrenant avec un deuxième pignon solidaire en rotation de l'arbre intermédiaire, et un organe de couplage sélectif ou non-sélectif du premier pignon et du deuxième pignon, cet organe de couplage étant par exemple un crabot, ou
- l'ensemble formé par : un pignon monté fou sur une sortie en couple d'un des deux moteurs électriques, ce pignon fou engrenant avec un premier pignon solidaire en rotation d'un arbre intermédiaire, un pignon solidaire en rotation d'une sortie en couple de l'autre des deux moteurs électriques, et engrenant avec un deuxième pignon solidaire en rotation de l'arbre intermédiaire, et un organe de couplage sélectif du pignon fou et de la sortie en couple du moteur électrique sur laquelle est monté ce pignon fou, cet organe de couplage étant par exemple un crabot, ou
- l'ensemble formé par : un pignon monté fou sur une sortie en couple d'un des deux moteurs électriques, ce pignon engrenant avec une chaine, et un pignon solidaire en rotation d'une sortie en couple de l'autre des deux moteurs électriques, et engrenant avec la chaine, et un organe de couplage sélectif du pignon fou avec la sortie du moteur électrique sur laquelle est monté ce pignon fou, cet organe de couplage étant par exemple un crabot, ou
- l'ensemble formé par : un pignon solidaire en rotation de la deuxième sortie en couple du premier moteur électrique, un pignon solidaire en rotation d'une sortie en couple du deuxième moteur électrique, et une chaîne engrenant avec chacun de ces pignons. Aucun organe de couplage sélectif n'est ici prévu, le troisième système de couplage n'étant pas sélectif selon cette dernière variante.

Le troisième système de couplage peut encore en variante être une liaison rigide permanente, le premier arbre de sortie étant par exemple directement fixé au deuxième arbre de sortie.

Dans tout ce qui précède, l'axe de rotation du premier arbre de sortie peut être confondu avec l'axe de rotation du deuxième arbre de sortie. Dans ce cas, la deuxième sortie en couple du premier moteur électrique peut être tournée vers le deuxième moteur électrique et la deuxième sortie en couple du deuxième moteur peut être tournée vers le premier moteur électrique. Le premier arbre de sortie et le deuxième arbre de sortie peuvent alors être disposés dans le prolongement l'un de l'autre. Les axes de rotation sont alors alignés.

En variante, dans tout ce qui précède, l'axe de rotation du premier arbre de sortie et l'axe de rotation du deuxième arbre de sortie peuvent être distincts, étant notamment parallèles mais non confondus ou non-alignés.

Dans tout ce qui précède, le système de propulsion selon la revendication 1 comprend un différentiel disposé de manière à recevoir l'un au moins du couple transitant par le premier réducteur et du couple transitant par le deuxième réducteur. Ce différentiel peut être un différentiel mécanique ou un différentiel électronique pilotant le couple d'entraînement sur chaque roue motrice du véhicule.

Le cas échéant, une ou plusieurs roues dentées intermédiaires peuvent être disposées en aval de chacun des premiers et deuxièmes réducteurs, et en amont du différentiel. Ces roues dentées, communes au chemin du couple transitant par le ou les premiers réducteurs et au chemin du couple transitant par le ou les deuxièmes réducteurs peuvent fournir un rapport de réduction additionnel ou non. En variante, aucune roue dentée additionnelle n'est disposée entre le ou les premiers réducteurs et le différentiel, et entre le ou les deuxièmes réducteurs et le différentiel.

Dans tout ce qui précède, lorsque le système de propulsion comprend trois systèmes de couplage, ce système de propulsion peut aussi comprendre un organe de pilotage des premier, deuxième et troisième système de couplage, de manière à ce que le système puisse prendre tout ou partie des configurations suivantes :
- une configuration selon laquelle le différentiel reçoit le couple transitant par le premier réducteur, ce couple étant généré par le premier moteur électrique,
- une configuration selon laquelle le différentiel reçoit le couple transitant par le deuxième réducteur, ce couple étant généré par le deuxième moteur électrique,
- une configuration selon laquelle le différentiel reçoit le couple transitant par le premier réducteur, ce couple étant généré par le premier moteur électrique et également le couple transitant par le deuxième réducteur, ce couple étant généré par le deuxième moteur électrique
- une configuration selon laquelle le différentiel reçoit le couple transitant par le premier réducteur, ce couple étant généré par le premier moteur électrique et par le deuxième moteur électrique, ou le cas échéant seulement par le deuxième moteur électrique,
- une configuration selon laquelle le différentiel reçoit le couple transitant par le deuxième réducteur, ce couple étant généré par le premier moteur électrique et par le deuxième moteur électrique, ou le cas échéant seulement par le premier moteur électrique, et
- une configuration de frein de stationnement dans laquelle les trois systèmes de couplage sont en configuration de couplage.

Lorsqu'un organe de sélection du ou des premiers réducteurs et/ou lorsqu'un organe de sélection du ou des deuxièmes réductions existe(nt), l'organe de pilotage ci-dessus peut aussi piloter ce ou ces organes de sélection.

L'organe de pilotage est par exemple intégré au calculateur du véhicule (ECU en anglais). En variante, l'organe de pilotage est intégré à l'unité de contrôle de la transmission (TCU en anglais). En variante encore, l'organe de pilotage peut être modulaire et le module de pilotage du premier et du deuxième système de couplage est intégré à l'unité de contrôle de la transmission tandis que le module de pilotage du troisième système de couplage est intégré au calculateur du véhicule.

Dans tout ce qui précède, le ratio entre le couple nominal fourni par le premier moteur électrique et le couple nominal fourni par le deuxième moteur électrique peut être compris entre 1 et 10, étant par exemple compris entre 1 et 4.

Le premier moteur électrique et le deuxième moteur électrique sont par exemple du même type, par exemple des machines synchrones à aimants ou à rotor bobiné. En variante, il peut s'agir de machines asynchrones, par exemple.

Dans tout ce qui précède, lorsque le système de propulsion comprend le premier système de couplage, le deuxième système de couplage et le troisième système de couplage, ces derniers peuvent être distincts les uns des autres. Le troisième système de couplage peut être en tout ou partie formé par des éléments qui lui sont propres, c'est-à-dire un ou plusieurs éléments qui n'appartiennent ni au premier système de couplage, ni au deuxième système de couplage.

L'invention pourra être mieux comprise à la lecture de la description qui va suivre d'exemples non limitatifs de mise en œuvre de celle-ci et à l'examen du dessin annexé sur lequel :
- la figure 1 représente de façon schématique un système de propulsion selon un premier exemple de mise en œuvre de l'invention,
- les figures 2 à 4 représentent des variantes du système de propulsion de la figure 1,
- la figure 5 représente de façon schématique un système de propulsion selon un deuxième exemple de mise en œuvre de l'invention,
- les figures 6 à 9 représentent de façon schématique des systèmes de propulsion non couverts par la revendication 1 mais qui sont utiles à la compréhension de l'invention,
- la figure 10 représente un embrayage utile pour réaliser un premier ou deuxième système de couplage, et
- la figure 11 représente un crabot utile pour réaliser un premier ou deuxième ou troisième système de couplage.

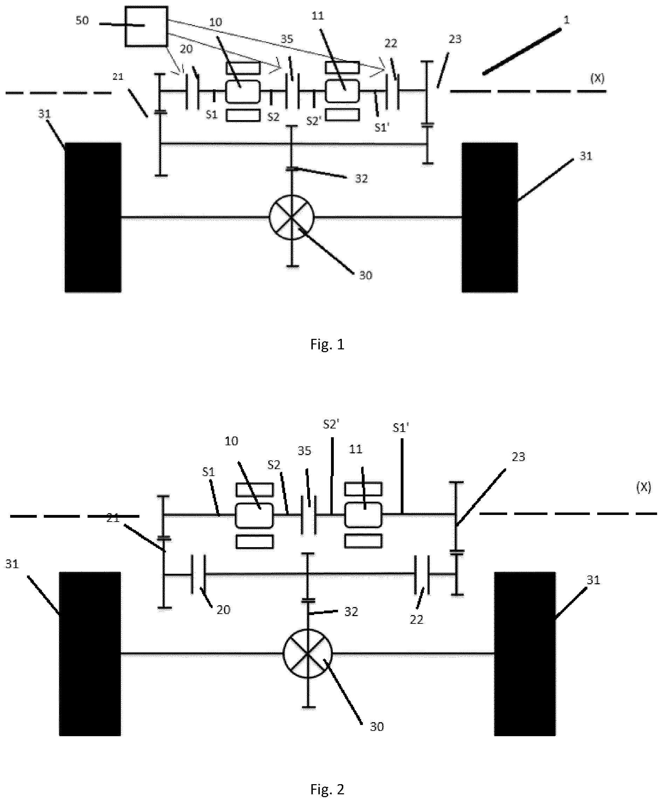

On a représenté sur la figure 1 un système de propulsion 1 de véhicule selon un premier exemple de mise en œuvre de l'invention.

Ce système de propulsion 1 est ici purement électrique, c'est-à-dire qu'il n'utilise aucun moteur thermique pour entraîner le véhicule qui est ici une automobile. Ce système de propulsion 1 comprend ici un premier moteur électrique 10 et un deuxième moteur électrique 11.

Le premier moteur électrique 10 et le deuxième moteur électrique 11 sont par exemple des machines synchrones à aimants permanents. Le premier moteur électrique 10 a par exemple un couple nominal 50 Nm tandis que le deuxième moteur électrique 11 a par exemple un couple nominal de 70 Nm. Comme on peut le voir sur la figure 1, chaque moteur électrique 10, 11 présente dans l'exemple décrit un rotor ayant un arbre de sortie tournant autour d'un axe de rotation et s'étendant axialement de chaque côté du stator du moteur électrique correspondant. Dans l'exemple décrit, les axes de rotation du premier moteur électrique et du deuxième moteur électrique sont confondus, les deux moteurs électriques 10 et 11 étant alignés selon cet axe X.

Le premier moteur électrique 1 comprend ainsi une première sortie en couple S1 disposée axialement d'un côté de ce moteur et une deuxième sortie en couple S2 disposée axialement d'un autre côté de ce moteur.

Le deuxième moteur électrique 2 comprend une première sortie en couple S1' disposée axialement d'un côté de ce moteur et une deuxième sortie en couple S2' disposée axialement d'un autre côté de ce moteur.

On constate sur la figure 1 que la deuxième sortie S2 du premier moteur électrique 10 est tournée vers le deuxième moteur électrique 11 et que la deuxième sortie S2' du deuxième moteur électrique 11 est tournée vers le premier moteur électrique 10.

La première sortie S1 du premier moteur électrique est, selon ce premier exemple de mise en œuvre, reliée à un premier système de couplage 20 qui est ici un système de couplage sélectif. Ce système de couplage 20 est représenté sous la forme d'un embrayage sur les figures 1 à 5 mais il pourrait être réalisé autrement, par exemple via un crabot.

Ce premier système de couplage 20 permet le couplage de la première sortie S1 du premier moteur électrique 10 à un premier réducteur 21, qui a par exemple un rapport de réduction de l'ordre de 12.

La première sortie S1' du deuxième moteur électrique est, selon ce premier exemple de mise en œuvre, reliée à un deuxième système de couplage 22 qui est ici un système de couplage sélectif. Similairement à ce qui a été mentionné pour le premier système de couplage 20, ce système est représenté sous la forme d'un embrayage sur les figures 1 à 5 mais il pourrait être réalisé autrement, par exemple via un crabot.

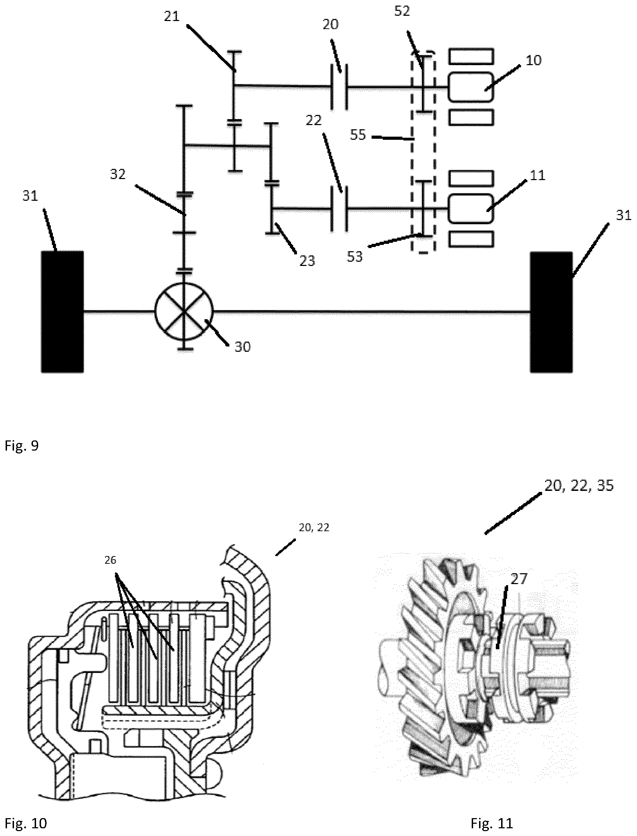

La figure 10 représente un exemple d'embrayage convenant à la réalisation du premier système de couplage 20 ou à la réalisation du deuxième système de couplage 22. Cet embrayage est ici un embrayage à lamelles, ces lamelles 26 s'accouplant pour transmettre le couple sous l'action d'un piston mobile.

En variante, chaque système de couplage 20, 22 pourrait mettre en œuvre un crabot, comme représenté sur la figure 11. Un tel système de couplage permet un accouplement par des dents 27 de deux pièces.

Le deuxième système de couplage 22 permet le couplage de la première sortie S1' du deuxième moteur électrique 11 à un deuxième réducteur 23, qui a par exemple un rapport de réduction de l'ordre de 8.

L'invention n'est pas limitée au positionnement du premier, respectivement deuxième, système de couplage 20, respectivement 22, en amont du premier réducteur 21, respectivement deuxième réducteur 23, dans le chemin du couple généré par le moteur 10, respectivement 11, correspondant. Le premier, respectivement deuxième, système de couplage 20, respectivement 22, peut en variante être disposé en aval du premier réducteur 21, respectivement deuxième réducteur 23, dans le chemin du couple généré par le moteur 10, respectivement 11, correspondant. Un tel autre système de propulsion avec positionnement inversé du réducteur par rapport au système de couplage est par exemple visible sur la figure 2.

Le système de propulsion 1 comprend encore un différentiel 30. Dans les exemples considérés, une ou plusieurs roues dentées 32 sont interposées entre le ou les premiers réducteurs 21 et le différentiel 30 et entre le ou les deuxièmes réducteurs 23 et le différentiel 30. Mais aucune roue dentée ne pourrait dans des variantes être prévue.

Dans l'exemple des figures 1 et 2, le système de propulsion 1 ne comprend qu'un unique premier réducteur 21 et qu'un unique deuxième réducteur 22 mais l'invention n'est pas limitée à ce cas.

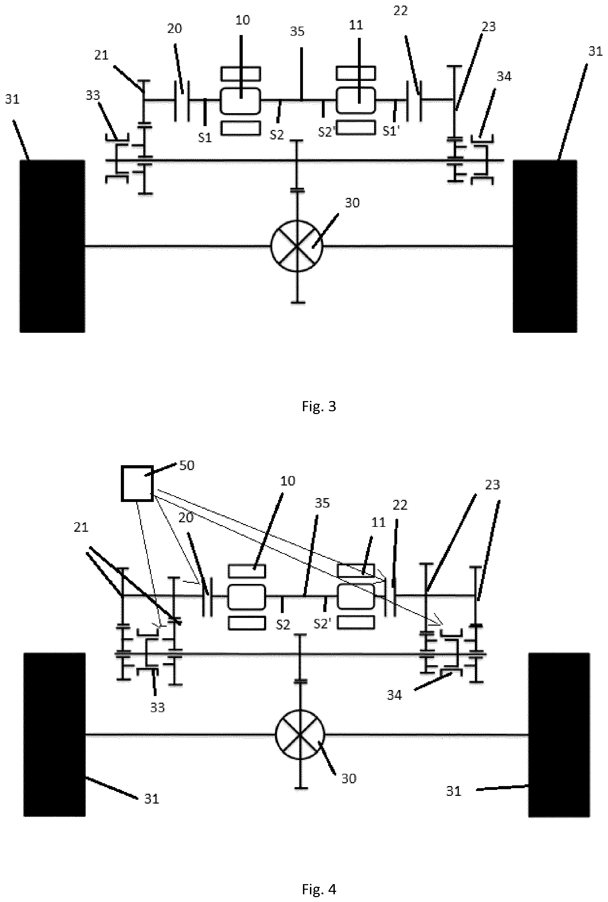

Ainsi, comme représenté sur la figure 4, plusieurs premiers réducteurs 21 peuvent être disposés en parallèle entre la première sortie en couple S1 du premier moteur électrique et le différentiel 30, et plusieurs deuxièmes réducteurs 23 peuvent être disposés en parallèle entre la première sortie en couple S1' du deuxième moteur électrique 11 et le différentiel 30.

Comme on peut le voir sur la figure 4, deux premiers réducteurs 21 sont ici en parallèle et deux deuxièmes réducteurs 23 sont en parallèle. Les deux premiers réducteurs 21 ont ici un premier rapport de réduction différent l'un par rapport à l'autre, tout comme les deux deuxièmes réducteurs 23. Le cas échéant, un organe de sélection 33 d'un des premiers réducteurs 21 et un organe de sélection 34 d'un des deuxièmes réducteurs 23 peuvent être prévus. Chacun de ces organes de sélection 33, 34 est ici un crabot.

La présence des organes de sélection 33 et 34 est également possible dans le cas où le système de propulsion comprend un unique premier réducteur 21 et un unique deuxième réducteur 22, comme on peut le voir sur la figure 3. Cet organe de sélection 33, 34 permet alors de déconnecter le réducteur 21, 23 correspondant.

Le différentiel 30 est disposé de manière à recevoir :
- le couple disponible sur la première sortie S1 du premier moteur électrique 10, après transit via le premier système de couplage 20 et le premier réducteur 21 dans l'exemple décrit, et/ou
- le couple disponible sur la première sortie S1' du deuxième moteur électrique 11, après transit via le deuxième système de couplage 22 et le deuxième réducteur 23 dans l'exemple décrit.

Le différentiel 30 permet de transmettre le couple aux roues 31.

Comme on peut le voir sur les figures 1 à 4, la deuxième sortie S2 du premier moteur électrique 10 est couplée à la deuxième sortie S2' du deuxième moteur électrique 11. Ce couplage se fait par l'intermédiaire d'un troisième système de couplage 35.

Sur les figures 1 et 2, ce troisième système de couplage 35 met en œuvre un embrayage, par exemple similaire à celui de la figure 10.

Sur les figures 3 et 4, ce troisième système de couplage 35 n'est pas sélectif, étant par exemple une courroie ou une fixation directe d'un arbre de sortie à l'autre.

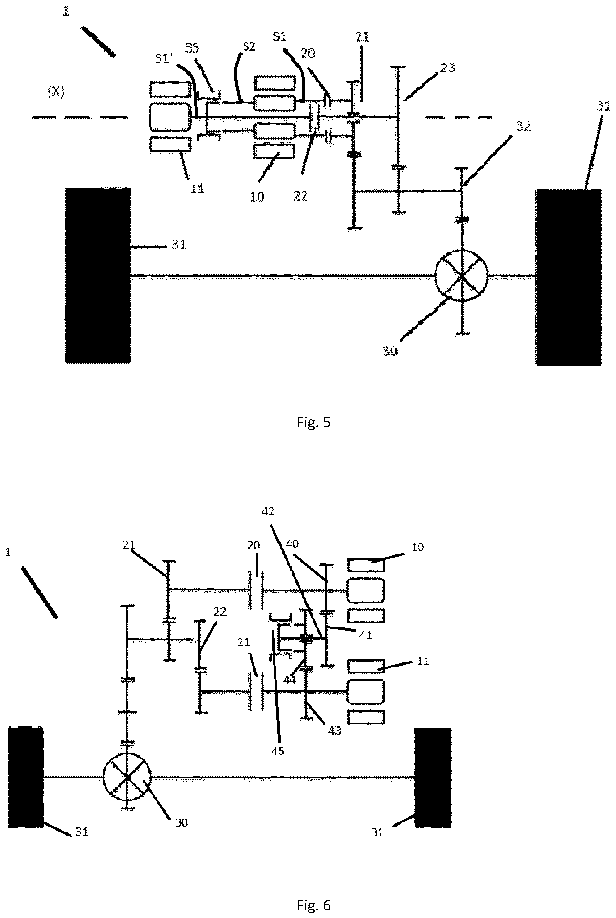

Sur la figure 5, ce troisième système de couplage 35 met en œuvre un crabot, par exemple tel que représenté sur la figure 11.

D'autres exemples sont possibles pour réaliser un troisième système de couplage sélectif ou non-sélectif.

Le troisième système de couplage 35 est par exemple adapté de celui représenté sur la figure 6. Cette figure 6 représente un système de propulsion 1 qui comprend les mêmes éléments que le système de propulsion des figures 1 à 4 mais agencés différemment puisque chaque moteur électrique 10 ou 11 ne comprend qu'une seule sortie en couple. Un tel troisième système de couplage 35 adapté de la figure 6 aux exemples des figures 1 à 4 serait un ensemble formé par : un pignon 40 qui serait par analogie avec la figure 6 solidaire en rotation de la deuxième sortie en couple S2 du premier moteur électrique 10 et engrenant avec un premier pignon 41 solidaire en rotation d'un arbre intermédiaire 42, un pignon 43 solidaire en rotation de la deuxième sortie en couple S2' du deuxième moteur électrique 11 et engrenant avec un deuxième pignon 44 monté fou sur l'arbre intermédiaire 42, et un crabot 45 formant un organe de couplage sélectif du premier pignon 41 et du deuxième pignon 44.

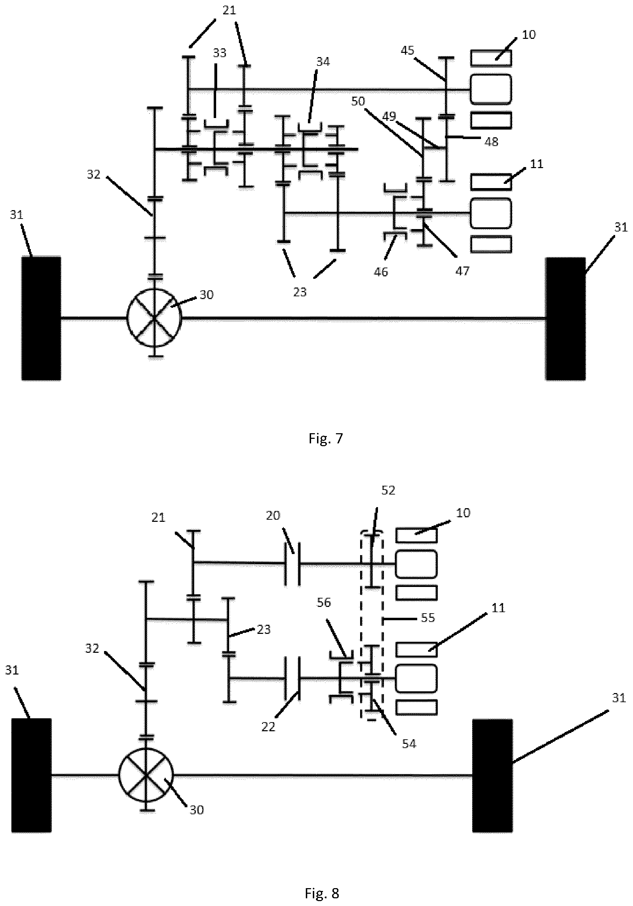

Le troisième système de couplage 35 peut encore être adapté de celui représenté sur la figure 7. Cette figure 7 représente un système de propulsion 1 qui comprend les mêmes éléments que le système de propulsion de la figure 1 mais agencés différemment puisque chaque moteur électrique 10 ou 11 ne comprend qu'une seule sortie en couple. Un tel système de couplage 35, adapté de la figure 7 serait un ensemble formé par un pignon 45 solidaire en rotation de la deuxième sortie en couple S2 du premier moteur électrique 10, un pignon 47 monté fou sur la deuxième sortie en couple S2' du deuxième moteur électrique 11, un premier pignon 48 solidaire en rotation d'un arbre intermédiaire 49 et engrenant avec le pignon 45, un deuxième pignon 50 solidaire en rotation de l'arbre intermédiaire 49 et engrenant avec le pignon 47, et un crabot 46 permettant de coupler sélectivement le pignon 47 à la sortie en couple S2' sur laquelle il est monté. Dans une variante, les pignons 48, 50 et l'arbre intermédiaire 49 peuvent être omis, le pignon fou 47 engrenant directement avec le pignon 45. On constate sur la figure 7 que le premier système de couplage 20 et le deuxième système de couplage 22 sont ici remplacés par les organes de sélection 33 et 34.

Le troisième système de couplage 35 peut encore être adapté de celui représenté sur la figure 8. Cette figure 8 représente un système de propulsion 1 qui comprend les mêmes éléments que le système de propulsion de la figure 1 mais agencés différemment puisque chaque moteur électrique 10 ou 11 ne comprend qu'une seule sortie en couple. Un tel système de couplage 35, adapté de la figure 8 serait un ensemble formé par un pignon 52 solidaire en rotation de la deuxième sortie en couple S2 du premier moteur électrique 10, un pignon 54 monté fou sur la deuxième sortie en couple S2' du deuxième moteur électrique 11, et une chaine 55 engrenant avec chaque pignon 52 et 54. Un crabot 56 est prévu pour coupler sélectivement le pignon 54 à la sortie en couple S2' sur laquelle il est monté.

Le troisième système de couplage 35 peut encore être adapté de celui représenté sur la figure 9. Cette figure 9 représente un système de propulsion 1 qui comprend les mêmes éléments que le système de propulsion de la figure 1 mais agencés différemment puisque chaque moteur électrique 10 ou 11 ne comprend qu'une seule sortie en couple. Un tel système de couplage 35, adapté de la figure 9 est un ensemble formé par un pignon 52 solidaire en rotation de la deuxième sortie en couple S2 du premier moteur électrique 10, un pignon 53 solidaire en rotation de la deuxième sortie en couple S2' du deuxième moteur électrique 11, et une chaine 55 engrenant avec chaque pignon 52 et 53. Aucun moyen de couplage sélectif n'est ici prévu, le troisième système de couplage 35 étant ici non-sélectif.

En variante encore, le premier système de couplage 20 et le deuxième système de couplage 22 mettent en œuvre des crabots et le troisième système de couplage 35 met en œuvre un embrayage.

Dans tout ce qui précède, le système de propulsion peut encore comprendre un organe de pilotage 50 des premier 20, deuxième 22 et troisième 35 système de couplage. Lorsque plusieurs premiers réducteurs 21 et/ou plusieurs deuxièmes réducteurs 23 sont présents, l'organe de pilotage 50 peut également permettre de sélectionner l'un parmi des réducteurs, le cas échéant via un module spécifique à ces premiers réducteurs ou à ces deuxièmes réducteurs, ce module spécifique commandant un organe de sélection 33 ou 34 tel que mentionné ci-dessus. Comme déjà mentionné, ces organes de sélection peuvent être présents avec un unique premier réducteur et un unique deuxième réducteur, auquel cas ils peuvent être pilotés par l'organe de pilotage 50, sans qu'il n'y ait nécessairement un premier système de couplage 20 et un deuxième système de couplage 22.

L'organe de pilotage 50 est programmé pour que le système de propulsion de la figure 1 puisse prendre les configurations suivantes :
- une configuration (i) selon laquelle le différentiel 30 reçoit le couple transitant par le premier réducteur 21, ce couple étant généré par le premier moteur électrique 10,
- une configuration (ii) selon laquelle le différentiel 30 reçoit le couple transitant par le deuxième réducteur 23, ce couple étant généré par le deuxième moteur électrique 11,
- une configuration (iii) selon laquelle le différentiel 30 reçoit le couple transitant par le premier réducteur 21, ce couple étant généré par le premier moteur électrique 10, et également le couple transitant par le deuxième réducteur 23, ce couple étant généré par le deuxième moteur électrique 11,
- une configuration (iv) selon laquelle le différentiel 30 reçoit le couple transitant par le premier réducteur 21, ce couple étant généré par le premier moteur électrique 10 et par le deuxième moteur électrique 11, ou le cas échéant seulement par le deuxième moteur électrique 11 lorsque le premier moteur électrique 10 est arrêté, et
- une configuration (v) selon laquelle le différentiel reçoit le couple transitant par le deuxième réducteur 23, ce couple étant généré par le premier moteur électrique 10 et par le deuxième moteur électrique 11, ou le cas échéant seulement par le premier moteur électrique 10 lorsque le deuxième moteur électrique 11 est arrêté, et
- une configuration (vi) dans laquelle chaque système de couplage 20, 22 et 35 est dans une position de couplage.

La commande des systèmes de couplage effectuée par l'organe de pilotage 50 pour obtenir les configurations (i) à (vi) ci-dessus est donnée dans le tableau ci-dessous

| Configuration | Premier système de couplage (20) | Deuxième système de couplage (22) | Troisième système de couplage (35) |
|---|---|---|---|
| (i) | couple | Découple | découple |
| (ii) | découple | Couple | découple |
| (iii) | couple | Couple | découple |
| (iv) | couple | Découple | couple |
| (v) | découple | couple | couple |
| (vi) | couple | couple | couple |

La configuration (i) est par exemple adaptée à de faibles vitesses du véhicule et à une faible consigne de couple.

La configuration (ii) est par exemple adaptée à de fortes vitesses du véhicule et à une faible consigne de couple.

La configuration (iii) est par exemple adaptée à un régime transitoire, par exemple lors du passage d'un rapport de réduction à un autre.

La configuration (iv) est par exemple adaptée à de faibles vitesses du véhicule et à une forte consigne de couple.

La configuration (v) est par exemple adaptée à de fortes vitesses du véhicule et à une forte consigne de couple.

La configuration (vi) est par exemple adaptée à un fonctionnement en frein de stationnement.

On va maintenant décrire en référence à la figure 5 un système de propulsion selon un deuxième exemple de mise en œuvre de l'invention.

Ce deuxième exemple diffère de celui qui a été décrit en référence à la figure 1 par le fait que le deuxième moteur électrique 11 ne comprend qu'une seule sortie en couple S1'. Cette sortie en couple S1' est d'une part couplée sélectivement ou non via le deuxième système de couplage 22 au deuxième réducteur 23, et d'autre part couplée sélectivement ou non via le troisième système de couplage 35 au premier moteur électrique 10.

On constate sur la figure 5 que le premier et le deuxième système de couplage peuvent être concentriques, le premier système de couplage 20 étant ici disposé autour du deuxième système de couplage 22.

Chaque système de couplage peut être réalisé selon ce qui a été décrit précédemment. L'un des troisièmes systèmes de couplage 35 adaptés des figures 6 à 9 et précédemment décrits peuvent être utilisés dans le cadre de la figure 5. Il diffère alors de celui décrit en référence à la figure 1 par le fait que le pignon 43, 47, 53 ou 54 est porté par la sortie en couple S1' du deuxième moteur électrique 11.

L'invention n'est pas limitée aux exemples qui viennent d'être décrits.

## Revendications

1. Système de propulsion (1) pour véhicule électrique, comprenant :
- un premier moteur électrique de propulsion (10), comprenant un stator et un rotor mobile en rotation autour d'un axe, ce rotor ayant un premier arbre de sortie définissant une première sortie en couple (S1) de ce premier moteur électrique (10) d'un côté du stator et une deuxième sortie en couple (S2) de ce premier moteur électrique (10) disposée d'un autre côté du stator, ces deux sorties en couple (S1, S2) étant axialement opposées,
- un deuxième moteur électrique de propulsion (11), comprenant un stator et un rotor mobile en rotation autour d'un axe, ce rotor ayant un deuxième arbre de sortie avec au moins une sortie en couple (S1', S2'),
- un premier réducteur (21) apte à recevoir le couple fourni sur la première sortie en couple (S1) du premier moteur électrique (10), le cas échéant par l'intermédiaire d'un premier système de couplage (20) sélectif ou non-sélectif, ce premier réducteur (21) présentant un premier rapport de réduction,
- un deuxième réducteur (23) apte à recevoir le couple fourni par le deuxième moteur électrique (11), le cas échéant par l'intermédiaire d'un deuxième système de couplage (22) sélectif ou non-sélectif, ce deuxième réducteur (23) présentant un deuxième rapport de réduction, et
- un troisième système de couplage (35), qui est sélectif ou non, de la deuxième sortie en couple (S2) du premier moteur électrique (10) avec la sortie en couple (S1', S2') du deuxième moteur électrique (11),
le système étant **caractérisé en ce qu'**il comprend un différentiel (30) disposé de manière à recevoir l'un au moins du couple transitant par le premier réducteur (21) et du couple transitant par le deuxième réducteur (23).

2. Système de propulsion selon la revendication 1, le premier réducteur (21) étant relié à la première sortie en couple (S1) du premier moteur électrique (10) par l'intermédiaire d'un premier système de couplage (20) sélectif ou non-sélectif, ou le système de propulsion comprenant un premier système de couplage (20) sélectif ou non-sélectif, relié à la première sortie en couple (S1) par l'intermédiaire du premier réducteur (21).

3. Système de propulsion selon la revendication 1 ou 2, le deuxième arbre de sortie ayant une première sortie en couple (S1') d'un côté du stator et une deuxième sortie en couple (S2') d'un autre côté du stator, ces deux sorties en couple (S1', S2') étant axialement opposées.

4. Système de propulsion selon la revendication 3, le deuxième réducteur (23) étant relié à la première sortie (S1') en couple du deuxième moteur électrique et la deuxième sortie en couple (S2') de ce deuxième moteur électrique étant couplée par l'intermédiaire du troisième système de couplage (35) avec la deuxième sortie en couple (S2) du premier moteur électrique (10).

5. Système de propulsion selon la revendication 4, le deuxième réducteur (23) étant relié à la première sortie en couple (S1') du deuxième moteur électrique (11) par l'intermédiaire d'un deuxième système de couplage (22), ou le système de propulsion comprenant un deuxième système de couplage (22) relié à la première sortie en couple (S1') du deuxième moteur électrique (11) par l'intermédiaire du deuxième réducteur (23).

6. Système de propulsion selon la revendication 1 ou 2, le deuxième arbre de sortie ayant sa sortie en couple (S1') d'un seul côté du stator et cette sortie en couple étant relié au deuxième réducteur (23) et étant couplée à la deuxième sortie (S2) en couple du premier moteur électrique (10) par l'intermédiaire du troisième système de couplage (35).

7. Système de propulsion selon la revendication 6, la sortie en couple (S1') du deuxième arbre de sortie étant reliée au deuxième réducteur (23) par l'intermédiaire d'un deuxième système de couplage (22) sélectif ou non-sélectif, ou le système comprenant un deuxième système de couplage sélectif ou non-sélectif relié à la sortie en couple (S1') du deuxième arbre de sortie par l'intermédiaire du deuxième réducteur (23),

8. Système selon l'une quelconque des revendications précédentes, chaque système de couplage (20, 22, 35) mettant en œuvre un embrayage.

9. Système selon les revendications 2 et 5 ou selon les revendications 2 et 7, le premier système de couplage (20) et le deuxième système de couplage (22) mettant en œuvre un embrayage, et le troisième système de couplage (35) mettant en œuvre un crabot, ou étant non-sélectif.

10. Système selon les revendications 2 et 5 ou selon les revendications 2 et 7, le premier système de couplage (20) et le deuxième système de couplage (22) mettant en œuvre un crabot, et le troisième système de couplage (35) mettant en œuvre un crabot, ou étant non-sélectif.

11. Système selon l'une quelconque des revendications précédentes, l'axe de rotation du premier arbre de sortie étant confondu avec l'axe de rotation du deuxième arbre de sortie.

12. Système selon les revendications 2 et 5 ou selon les revendications 2 et 7, comprenant un organe de pilotage (50) des premier (20), deuxième (22) et troisième (35) système de couplage de manière à ce que le système de propulsion (1) puisse prendre tout ou partie des configurations suivantes :
- une configuration (i) selon laquelle le différentiel (30) reçoit le couple transitant par le premier réducteur (21), ce couple étant généré par le premier moteur électrique (10),
- une configuration (ii) selon laquelle le différentiel (30) reçoit le couple transitant par le deuxième réducteur (23), ce couple étant généré par le deuxième moteur électrique (11),
- une configuration (iii) selon laquelle le différentiel (30) reçoit le couple transitant par le premier réducteur (21), ce couple étant généré par le premier moteur électrique (10) et également le couple transitant par le deuxième réducteur (23), ce couple étant généré par le deuxième moteur électrique (11),
- une configuration (iv) selon laquelle le différentiel reçoit le couple transitant par le premier réducteur (21), ce couple étant généré par le premier moteur électrique (10) et par le deuxième moteur électrique (11), ou le cas échéant seulement par le deuxième moteur électrique (11), et
- une configuration (v) selon laquelle le différentiel (30) reçoit le couple transitant par le deuxième réducteur (23), ce couple étant généré par le premier moteur électrique (10) et par le deuxième moteur électrique (11), ou le cas échéant seulement par le premier moteur électrique (10), et
- une configuration (vi) de frein de stationnement dans laquelle les trois systèmes de couplage sont en configuration de couplage.

13. Système selon l'une quelconque des revendications précédentes, plusieurs premiers réducteurs (21), notamment deux premiers réducteurs (21), de premier rapport de réduction différant d'un premier réducteur (21) à l'autre étant disposés en parallèle et/ou plusieurs deuxièmes réducteurs (23), notamment deux deuxièmes réducteurs (23), de deuxième rapport de réduction différant d'un deuxième réducteur à l'autre étant disposés en parallèle.

14. Système selon les revendications 2 et 5 ou selon les revendications 2 et 7, le troisième système de couplage (35) étant en tout ou partie formé par des éléments qui lui sont propres, n'appartenant ni au premier système de couplage (20), ni au deuxième système de couplage (22).

## Patentansprüche

1. Antriebssystem (1) für ein Elektrofahrzeug, das enthält:
- einen elektrischen Antriebsmotor (10), der einen Stator und einen um eine Achse drehbeweglichen Rotor enthält, wobei dieser Rotor eine erste Ausgangswelle hat, die einen ersten Drehmomentausgang (S1) dieses ersten Elektromotors (10) auf einer Seite des Stators und einen zweiten Drehmomentausgang (S2) dieses ersten Elektromotors (10) definiert, der auf einer anderen Seite des Stators angeordnet ist, wobei diese zwei Drehmomentausgänge (S1, S2) axial entgegengesetzt sind,
- einen zweiten elektrischen Antriebsmotor (11), der einen Stator und einen um eine Achse drehbeweglichen Rotor enthält, wobei dieser Rotor eine zweite Ausgangswelle mit mindestens einem Drehmomentausgang (S1', S2') hat,
- ein erstes Getriebe (21), das geeignet ist, das am ersten Drehmomentausgang (S1) des ersten Elektromotors (10) gelieferte Drehmoment zu empfangen, gegebenenfalls mittels eines ersten selektiven Kopplungssystems (20), das selektiv ist oder nicht, wobei dieses erste Getriebe (21) ein erstes Untersetzungsverhältnis aufweist,
- ein zweites Getriebe (23), das geeignet ist, das vom zweiten Elektromotor (11) gelieferte Drehmoment zu empfangen, gegebenenfalls mittels eines zweiten selektiven Kopplungssystems (22), das selektiv ist oder nicht, wobei dieses zweite Getriebe (23) ein zweites Untersetzungsverhältnis aufweist, und
- ein drittes Kopplungssystem (35), das selektiv ist oder nicht, des zweiten Drehmomentausgangs (S2) des ersten Elektromotors (10) mit dem Drehmomentausgang (S1', S2') des zweiten Elektromotors (11),
**dadurch gekennzeichnet, dass** der Antrieb ein Differential (30) enthält, das so angeordnet ist, dass es mindestens eines von dem das erste Getriebe (21) durchquerenden Drehmoment und dem das zweite Getriebe (23) durchquerenden Drehmoment empfängt.

2. Antriebssystem nach Anspruch 1, wobei das erste Getriebe (21) mit dem ersten Drehmomentausgang (S1) des ersten Elektromotors (10) mittels eines ersten selektiven oder nicht selektiven Kopplungssystems (20) verbunden ist, oder das Antriebssystem ein erstes selektives oder nicht selektives Kopplungssystem (20) enthält, das mit dem ersten Drehmomentausgang (S1) mittels des ersten Getriebes (21) verbunden ist.

3. Antriebssystem nach Anspruch 1 oder 2, wobei die zweite Ausgangswelle einen ersten Drehmomentausgang (S1') auf einer Seite des Stators und einen zweiten Drehmomentausgang (S2') auf einer anderen Seite des Stators hat, wobei diese zwei Drehmomentausgänge (S1', S2') axial entgegengesetzt sind.

4. Antriebssystem nach Anspruch 3, wobei das zweite Getriebe (23) mit dem ersten Drehmomentausgang (S1') des zweiten Elektromotors verbunden ist und der zweite Drehmomentausgang (S2') dieses zweiten Elektromotors mittels des dritten Kopplungssystems (35) mit dem zweiten Drehmomentausgang (S2) des ersten Elektromotors (10) gekoppelt ist.

5. Antriebssystem nach Anspruch 4, wobei das zweite Getriebe (23) mit dem ersten Drehmomentausgang (S1') des zweiten Elektromotors (11) mittels eines zweiten Kopplungssystems (22) verbunden ist, oder das Antriebssystem ein zweites Kopplungssystem (22) enthält, das mit dem ersten Drehmomentausgang (S1') des zweiten Elektromotors (11) mittels des zweiten Getriebes (23) verbunden ist.

6. Antriebssystem nach Anspruch 1 oder 2, wobei die zweite Ausgangswelle ihren Drehmomentausgang (S1') nur auf einer Seite des Stators hat und dieser Drehmomentausgang mit dem zweiten Getriebe (23) verbunden und mit dem zweiten Drehmomentausgang (S2) des ersten Elektromotors (10) mittels des dritten Kopplungssystems (35) gekoppelt ist.

7. Antriebssystem nach Anspruch 6, wobei der Drehmomentausgang (S1') der zweiten Ausgangswelle mit dem zweiten Getriebe (23) mittels eines zweiten selektiven oder nicht selektiven Kopplungssystems (22) verbunden ist, oder das System ein zweites selektives oder nicht selektives Kopplungssystem enthält, das mit dem Drehmomentausgang (S1') der zweiten Ausgangswelle mittels des zweiten Getriebes (23) verbunden ist.

8. System nach einem der vorhergehenden Ansprüche, wobei jedes Kopplungssystem (20, 22, 35) eine Schaltkupplung verwendet.

9. System nach Anspruch 2 und 5 oder nach Anspruch 2 und 6, wobei das erste Kopplungssystem (20) und das zweite Kopplungssystem (22) eine Schaltkupplung verwenden, und das dritte Kopplungssystem (35) eine Schaltklaue verwendet oder nicht-selektiv ist.

10. System nach Anspruch 2 und 5 oder nach Anspruch 2 und 7, wobei das erste Kopplungssystem (20) und das zweite Kopplungssystem (22) eine Schaltklaue verwenden, und das dritte Kopplungssystem (35) eine Schaltklaue verwendet oder nicht-selektiv ist.

11. System nach einem der vorhergehenden Ansprüche, wobei die Drehachse der ersten Ausgangswelle mit der Drehachse der zweiten Ausgangswelle deckungsgleich ist.

12. System nach den Ansprüchen 2 und 5 oder nach den Ansprüchen 2 und 7, das ein Steuerorgan (50) des ersten (20), zweiten (22) und dritten (35) Kopplungssystems enthält, damit das Antriebssystem (1) alle oder einen Teil der folgenden Konfigurationen einnehmen kann:
- eine Konfiguration (i), gemäß der das Differential (30) das das erste Getriebe (21) durchquerende Drehmoment empfängt, wobei dieses Drehmoment vom ersten Elektromotor (10) erzeugt wird,
- eine Konfiguration (ii), gemäß der das Differential (30) das das zweite Getriebe (23) durchquerende Drehmoment empfängt, wobei dieses Drehmoment vom zweiten Elektromotor (11) erzeugt wird,
- eine Konfiguration (iii), gemäß der das Differential (30) das das erste Getriebe (21) durchquerende Drehmoment, wobei dieses Drehmoment vom ersten Elektromotor (10) erzeugt wird, und ebenfalls das das zweite Getriebe (23) durchquerende Drehmoment empfängt, wobei dieses Drehmoment vom zweiten Elektromotor (11) erzeugt wird,
- eine Konfiguration (iv), gemäß der das Differential das das erste Getriebe (21) durchquerende Drehmoment empfängt, wobei dieses Drehmoment vom ersten Elektromotor (10) und vom zweiten Elektromotor (11) oder ggf. nur vom zweiten Elektromotor (11) erzeugt wird, und
- eine Konfiguration (v), gemäß der das Differential (30) das das zweite Getriebe (23) durchquerende Drehmoment empfängt, wobei dieses Drehmoment vom ersten Elektromotor (10) und vom zweiten Elektromotor (11) oder ggf. nur vom ersten Elektromotor (10) erzeugt wird, und
- eine Feststellbremse-Konfiguration (vi), in der die drei Kopplungssysteme in Kopplungskonfiguration sind.

13. System nach einem der vorhergehenden Ansprüche, wobei mehrere erste Getriebe (21), insbesondere zwei erste Getriebe (21), mit einem ersten Untersetzungsverhältnis, das von einem ersten Getriebe (21) zum anderen unterschiedlich ist, parallel angeordnet sind, und/oder mehrere zweite Getriebe (23), insbesondere zwei zweite Getriebe (23), mit einem zweiten Untersetzungsverhältnis, das von einem zweiten Getriebe zum anderen unterschiedlich ist, parallel angeordnet sind.

14. System nach einem der vorhergehenden Ansprüche, das das erste (20), zweite (22) und dritte (35) Kopplungssystem enthält, wobei diese Kopplungssysteme unterschiedlich voneinander sind, und wobei das dritte Kopplungssystem völlig oder teiling aus Elementen ausgebildet ist, die weder dem ersten Kopplungssystem (20) noch dem zweiten Kopplungssystem (22) gehören.

## Claims

1. A propulsion system (1) for an electric vehicle, comprising:
- a first electric propulsion motor (10) comprising a stator and a rotor able to rotate about an axis, this rotor having a first output shaft defining a first torque output (S1) of this first electric motor (10) on one side of the stator and a second torque output (S2) of this first electric motor (10) which output is arranged on another side of the stator, these two torque outputs (S1, S2) being axially opposed,
- a second electric propulsion motor (11) comprising a stator and a rotor able to rotate about an axis, this rotor having a second output shaft with at least one torque output (S1', S2'),
- a first reducer (21) able to receive the torque supplied on the first torque output (S1) of the first electric motor (10), where appropriate via a first selective or non-selective coupling system (20), this first reducer (21) having a first reduction ratio,
- a second reducer (23) able to receive the torque supplied by the second electric motor (11), where appropriate via a second selective or non-selective coupling system (22), this second reducer (23) having a second reduction ratio, and
- a third coupling system (35), which may or may not be selective, for coupling the second torque output (S2) of the first electric motor (10) to the torque output (S1', S2') of the second electric motor (11),
the system being **characterized in that** it comprises a differential (30) arranged in such a way as to receive at least one of: the torque passing via the first reducer (21), and the torque passing via the second reducer (23).

2. The propulsion system as claimed in claim 1, the first reducer (21) being connected to the first torque output (S1) of the first electric motor (10) via a first selective or non-selective coupling system (20), or the propulsion system comprising a first selective or non-selective coupling system (20) connected to the first torque output (S1) via the first reducer (21).

3. The propulsion system as claimed in claim 1 or 2, the second output shaft having a first torque output (S1') on one side of the stator and a second torque output (S2') on another side of the stator, these two torque outputs (S1', S2') being axially opposed.

4. The propulsion system as claimed in claim 3, the second reducer (23) being connected to the first torque output (S1') of the second electric motor, and the second torque output (S2') of this second electric motor being coupled via the third coupling system (35) to the second torque output (S2) of the first electric motor (10).

5. The propulsion system as claimed in claim 4, the second reducer (23) being connected to the first torque output (S1') of the second electric motor (11) via a second coupling system (22), or the propulsion system comprising a second coupling system (22) connected to the first torque output (S1') of the second electric motor (11) via the second reducer (23).

6. The propulsion system as claimed in claim 1 or 2, the second output shaft having its torque output (S1') on just one side of the stator and this torque output being connected to the second reducer (23) and being coupled to the second torque output (S2) of the first electric motor (10) via the third coupling system (35).

7. The propulsion system as claimed in claim 6, the torque output (S1') of the second output shaft being connected to the second reducer (23) via a second selective or non-selective coupling system (22), or the system comprising a second selective or non-selective coupling system connected to the torque output (S1') of the second output shaft via the second reducer (23).

8. The system as claimed in any one of the preceding claims, each coupling system (20, 22, 35) employing a clutch.

9. The system as claimed in claims 2 and 5 or as claimed in claims 2 and 7, the first coupling system (20) and the second coupling system (22) employing a clutch, and
the third coupling system (35) employing a dog clutch, or being non-selective.

10. The system as claimed in claims 2 and 5 or as claimed in claims 2 and 7, the first coupling system (20) and the second coupling system (22) employing a dog clutch, and
the third coupling system (35) employing a dog clutch, or being non-selective.

11. The system as claimed in any one of the preceding claims, the axis of rotation of the first output shaft being coincident with the axis of rotation of the second output shaft.

12. The system as claimed in claims 2 and 5, or as claimed in claims 2 and 7, comprising a control member (50) for controlling the first (20), second (22) and third (35) coupling system so that the propulsion system (1) can adopt all or some of the following configurations:
- a configuration (i) whereby the differential (30) receives the torque passing via the first reducer (21), this torque being generated by the first electric motor (10),
- a configuration (ii) whereby the differential (30) receives the torque passing via the second reducer (23), this torque being generated by the second electric motor (11),
- a configuration (iii) whereby the differential (30) receives the torque passing via the first reducer (21), this torque being generated by the first electric motor (10), and also the torque passing via the second reducer (23), this torque being generated by the second electric motor (11),
- a configuration (iv) whereby the differential receives the torque passing via the first reducer (21), this torque being generated by the first electric motor (10), and by the second electric motor (11) or, where appropriate, only by the second electric motor (11), and
- a configuration (v) whereby the differential (30) receives the torque passing via the second reducer (23), this torque being generated by the first electric motor (10), and by the second electric motor (11) or, where appropriate, only by the first electric motor (10), and
- a parking-brake configuration (vi) in which the three coupling systems are in the coupled configuration.

13. The system as claimed in any one of the preceding claims, several first reducers (21), notably two first reducers (21), with first reduction gear ratios that differ from one first reducer (21) to the other, being arranged in parallel and/or several second reducers (23), notably two second reducers (23), with second reduction gear ratios that differ from one second reducer to the other, being arranged in parallel.

14. The system as claimed in any one of the preceding claims, the system comprising the first coupling system (20), the second coupling system (22) and the third coupling system (35), these coupling systems being distinct from one another, the third coupling system (35) being formed in full or in part by elements elements which belong neither to the first coupling system (20) nor to the second coupling system (22).
